# FASCICULE DE BREVET EUROPEEN

(11) **EP 2 929 603 B1**
(45) Date de publication et mention de la délivrance du brevet: **04.01.2017**
(21) Numéro de dépôt: 13815051.1
(22) Date de dépôt: 04.12.2013
(51) Int. Cl.: H01S 3/08, H01S 3/081, H01S 3/23, H01S 3/00

(54) **SYSTÈME ET PROCÉDÉ DE GÉNÉRATION D'UNE SALVE D'IMPULSIONS LASER ULTRACOURTES ET DE FORTE PUISSANCE**
SYSTEM UND VERFAHREN ZUR ERZEUGUNG EINER FOLGE VON ULTRAKURZEN HOCHLEISTUNGSLASERIMPULSEN
SYSTEM AND METHOD FOR GENERATING A BURST OF ULTRA-SHORT, HIGH-POWER LASER PULSES

(30) Priorité: 04.12.2012 FR 1261628
(43) Date de publication de la demande: 14.10.2015
(73) Titulaire: Amplitude Systemes, 33600 Pessac (FR)
(72) Inventeur: COURJAUD, Antoine, F-33850 Leognan (FR)
(74) Mandataire: Jacobacci Coralis Harle
(86) Numéro de dépôt international: PCT/FR2013/052947
(87) Numéro de publication internationale: WO 2014/087104

(56) Documents cités:
- WO-A1-2008/016287
- WO-A1-2009/103313
- US-A- 5 434 875
- US-A1- 2012 213 236
- US-A1- 2012 243 565

## Description

La présente invention se rapporte de manière générale aux lasers à impulsions ultracourtes et de haute énergie. Plus précisément, l'invention se rapporte à un procédé et un système de génération de salves d'impulsions laser de forte puissance.

Les amplificateurs laser sont des systèmes optiques comprenant une structure amplificatrice pompée optiquement, confinée spatialement, et un système optique permettant d'apporter et d'adapter la propagation du faisceau laser à amplifier au volume de gain disponible dans la structure amplificatrice. Lors de la propagation du faisceau laser à amplifier dans la structure amplificatrice, un transfert d'énergie s'effectue entre l'énergie stockée dans la structure amplificatrice et l'énergie du faisceau, de manière cohérente : c'est l'émission stimulée. Ce transfert s'effectue en compétition avec un processus incohérent, appelé émission spontanée.

La quantité d'énergie transférée de la structure amplificatrice au faisceau laser dépend de paramètres liés au faisceau laser et aux caractéristiques de la structure amplificatrice.

En fonction des paramètres du faisceau laser et du milieu amplificateur, le transfert d'énergie peut ne pas être optimal après une seule traversée du faisceau. Dans ce cas, il est intéressant d'effectuer un certain nombre de traversées du faisceau laser dans la même structure amplificatrice pour extraire de manière optimale l'énergie stockée dans le milieu amplificateur.

On connaît différentes configurations géométriques simples utilisées pour effectuer un nombre réduit (2 à 8) de passages du faisceau dans la structure amplificatrice, par multiplexage angulaire ou en polarisation. La configuration multi passage peut être optimisée en fonction des différents paramètres du faisceau (taille, divergence) et du rapport de forme du volume d'amplification (longueur sur diamètre).

Pour un nombre de passages de faisceaux plus élevé, ou pour un rapport de forme élevé, on utilise un amplificateur régénératif, comprenant une cavité régénérative. La cavité régénérative comporte des miroirs assurant la propagation rigoureusement identique du faisceau dans la cavité : on parle de cavité stable. Par ailleurs, un composant actif permet d'injecter un faisceau à un instant donné, de conserver le faisceau dans la cavité de manière à ce que son énergie soit amplifiée progressivement à mesure que le faisceau effectue des passages dans le milieu amplificateur. Le composant actif est habituellement une cellule électro-optique, appelée cellule de Pockels, mais peut être également un élément acoustooptique.

L'efficacité du système amplificateur est mesurée par le rapport entre l'énergie extraite par le faisceau laser et l'énergie stockée dans le milieu amplificateur. Cette efficacité d'extraction dépend du rapport entre le gain intrinsèque du milieu amplificateur et les pertes subies par le faisceau dans la cavité régénérative, pertes provenant de l'imperfection des miroirs utilisés et des composants transmissifs ou réflectifs tels que polariseur, cellule de Pockels...

La fluence extraite J_{Lext} peut alors s'exprimer en fonction de la fluence de saturation J_{Lsat}, la fluence stockée J_{Lsto}, le nombre de passages dans le milieu amplificateur k_{L} et la réflectivité totale R de la cavité.

Une cavité régénérative a l'avantage de permettre un nombre très élevé de passages dans le milieu amplificateur. Toutefois, une cavité régénérative présente une limitation du fait des pertes introduites par les éléments constituant la porte optique (polariseur et cellule de Pockels), ainsi que dans les dimensions de ces composants, limités par la technologie.

Dans certaines applications, par exemple dans un instrument scientifique tel qu'un synchrotron, on souhaite générer une salve de deux à un millier d'impulsions laser, chaque salve d'impulsions ayant une énergie déterminée de l'ordre du milli-joule et les impulsions d'une salve étant à une fréquence de l'ordre d'une centaine de Hertz.

Dans le présent document, on entend par salve d'impulsions laser une série d'au moins deux impulsions laser, deux impulsions successives d'une salve étant émises à un intervalle de temps régulier correspondant à une première fréquence, et deux salves successives étant émises à un intervalle de temps correspondant à une deuxième fréquence. On utilise de manière équivalente dans la suite du présent document les termes suivants : salve d'impulsions, train d'impulsions, série d'impulsions ou macro-pulse (multibunch ou burst en anglais).

On connaît du document WO2009/103313A1 un générateur de salves d'impulsions laser, basé sur un amplificateur régénératif et une cellule de Pockels. Ce dispositif permet de piéger une impulsion laser initiale dans une cavité optique résonante et d'extraire une fraction de l'impulsion laser initiale à chaque passage sur la cellule de Pockels de manière à générer une salve d'impulsions à une deuxième fréquence supérieure à la fréquence des impulsions laser initiales. Ce dispositif nécessite une synchronisation fine de la cellule de Pockels vis-à-vis de chaque aller-retour de l'impulsion dans la cavité secondaire, la stabilité en énergie de chaque impulsion dépend directement de la gigue temporelle des signaux de synchronisation du dispositif. Les impulsions d'une salve sont émises à une fréquence élevée et nécessitent un ajustement précis de la longueur de la cavité lorsque l'on désire synchroniser ces impulsions à une référence électronique externe. Par ailleurs, il s'agit d'un dispositif supplémentaire au laser impulsionnel initial, avec une efficacité et une stabilité propres.

Un des buts de l'invention est de générer une salve d'impulsions laser formant un macropulse d'énergie élevée, à une cadence de salve relativement basse (quelques dizaines à quelques centaines de Hertz), dans une architecture simplifiée et plus efficace.

La présente invention a pour but de remédier à ces inconvénients.

L'invention concerne un système de génération d'une salve d'impulsions laser ultracourtes et de forte puissance comprenant des moyens de génération d'impulsions laser à une première fréquence de répétition f1 et une période de répétition τ1 égale à l'inverse de la première fréquence de répétition f1 ; des moyens d'amplification comprenant un milieu amplificateur optique, une cavité optique régénérative, des moyens d'injection desdites impulsions laser dans ladite cavité optique régénérative et des moyens d'extraction desdites impulsions laser de ladite cavité optique régénérative.

Selon l'invention, la cavité optique régénérative présente une longueur totale telle que la durée d'un aller-retour de chaque impulsion dans ladite cavité optique régénérative est comprise entre N-1 et N fois la période de répétition τ1 des moyens de génération desdites impulsions laser, où N est un nombre entier supérieur ou égal à deux, lesdits moyens d'injection étant adaptés pour piéger une salve de N impulsions laser dans ladite cavité optique régénérative, lesdits moyens d'extraction étant adaptés pour extraire ladite salve de N impulsions laser de ladite cavité optique régénérative et ledit milieu amplificateur optique étant adapté pour amplifier ladite salve de N impulsions laser et former une salve d'impulsions laser amplifiées.

L'invention permet de générer une salve d'impulsions laser amplifiées parfaitement synchronisées avec la fréquence de génération des impulsions initiales.

De façon avantageuse, la cavité optique régénérative comporte un système optique de matrice unitaire.

Selon différents aspects de modes de réalisation du système :
- lesdits moyens d'injection et les moyens d'extraction comportent une cellule de Pockels configurée de manière à être entièrement bloquante entre l'injection de la salve d'impulsions et l'extraction de ladite salve d'impulsions ;
- la cavité optique régénérative est une cavité multipassage et le milieu amplificateur est disposé dans ladite cavité optique régénérative multipassage de manière à ce qu'une impulsion de la salve d'impulsions effectue une pluralité de passages par le milieu amplificateur ;
- ladite cavité optique régénérative comprend un premier miroir concave de rayon de courbure R, et un deuxième miroir concave de rayon de courbure R/2, la distance entre le premier miroir et le deuxième miroir étant égale à R et la distance entre le premier miroir et le milieu amplificateur optique étant égale à R ;
- la cavité optique régénérative est une cavité multipassage comportant un système optique à miroirs disposés de manière à ce que le faisceau incident sur chacun desdits miroirs soit décalé spatialement à chaque passage dans ladite cavité multipassage ;
- le milieu amplificateur est disposé à l'intérieur de ladite cavité optique régénérative.

Selon un mode de réalisation particulier, ledit milieu amplificateur optique fonctionne en réflexion.

Dans un autre mode de réalisation, ledit milieu amplificateur optique fonctionne en transmission, ladite cavité optique régénérative comprenant en outre un troisième miroir concave de rayon de courbure R, un quatrième miroir concave de rayon de courbure R/2, la distance entre le troisième miroir et le quatrième miroir étant égale à R et la distance entre le troisième miroir et le milieu amplificateur optique étant égale à R.

L'invention concerne aussi un procédé de génération d'une salve d'impulsions laser ultracourtes et de forte puissance comprenant les étapes suivantes :
- génération d'impulsions laser à une première fréquence de répétition f1 et une période de répétition τ1 égale à l'inverse de la première fréquence de répétition f1 ;
- injection desdites impulsions laser dans une cavité optique régénérative d'un amplificateur régénératif, la cavité optique régénérative présente une longueur totale telle que la durée d'un aller-retour de chaque impulsion dans ladite cavité optique régénérative est comprise entre N-1 et N fois la période τ1 des moyens de génération desdites impulsions laser, où N est un nombre entier supérieur ou égal à deux,
- piégeage d'une salve de N impulsions laser dans ladite cavité optique régénérative;
- extraction de ladite salve de N impulsions laser de ladite cavité optique régénérative, et
- amplification optique de ladite salve de N impulsions laser pour former une salve d'impulsions laser amplifiées.

L'invention trouvera une application particulièrement avantageuse dans la génération d'une salve d'impulsions laser ultracourtes et de forte puissance.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :
- la figure 1 représente schématiquement un générateur de salves d'impulsions laser de forte puissance selon un premier mode de réalisation de l'invention ;
- la figure 2 représente schématiquement un générateur de salves d'impulsions laser de forte puissance selon une variante du premier mode de réalisation de l'invention;
- la figure 3 représente schématiquement un premier exemple de réalisation d'une cavité multi passage pour un amplificateur régénératif comprenant un milieu amplificateur optique fonctionnant en réflexion ;
- la figure 4A représente schématiquement une vue de face de deux miroirs de la cavité multi passage de la figure 3, ainsi que le décalage d'un faisceau laser sur ces deux miroirs à chaque passage dans la cavité ; la figure 4B représente schématiquement une vue de face d'un autre miroir de la cavité multi passage de la figure 3, ainsi que le décalage d'un faisceau laser sur cet autre miroir à chaque passage dans la cavité ;
- la figure 5 représente schématiquement un deuxième exemple de réalisation d'une cavité multi passage pour un amplificateur régénératif comprenant un milieu amplificateur optique fonctionnant en transmission ;
- la figure 6A représente schématiquement une vue de face de deux miroirs de la cavité multi passage de la figure 5, ainsi que le décalage d'un faisceau laser sur ces deux miroirs à chaque passage dans la cavité ; la figure 6B représente schématiquement une vue de face d'un autre miroir de la cavité multi passage de la figure 5, ainsi que le décalage d'un faisceau laser sur cet autre miroir à chaque passage dans la cavité.

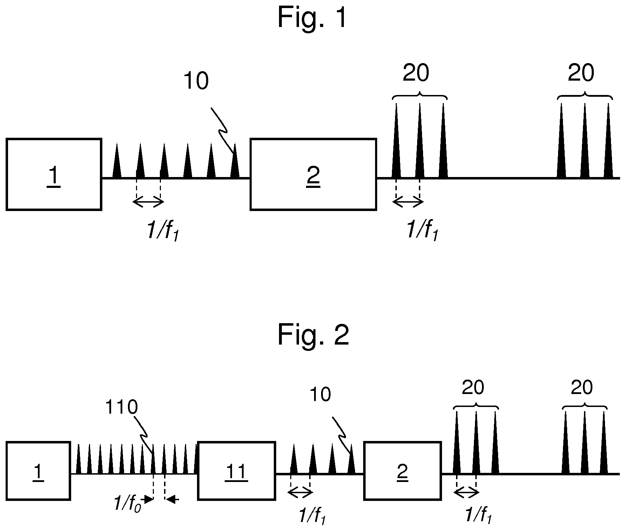

La figure 1 représente un système de génération de salves d'impulsions laser. Le système comporte un oscillateur impulsionnel 1 et un amplificateur régénératif 2.

L'oscillateur impulsionnel 1 génère des impulsions laser 10 à une fréquence de répétition ci-après dénommée première fréquence f₁. Autrement dit, les impulsions laser 10 sont émises successivement avec une période τ1 égale à 1/f₁. La première fréquence f₁ est généralement comprise entre 50MHz et 1 GHz. La fréquence f₁ de l'oscillateur 1 est choisie en fonction de l'application requise. De façon avantageuse, l'oscillateur impulsionnel 1 est synchronisé en cadence à une fréquence d'horloge externe. Les impulsions laser 10 ont une durée comprise généralement entre 20fs à 10ps et une largeur spectrale de 0,1 à 50nm.

De manière générale, l'amplificateur régénératif 2 comporte un milieu amplificateur optique à gain et une cavité optique, dite cavité régénérative formée généralement de miroirs. De façon préférée, afin d'assurer la stabilité de la cavité régénérative, celle-ci comporte un arrangement optique constituant une matrice unitaire, dans laquelle un faisceau optique peut se propager un nombre de fois égal à K, où K est un entier supérieur ou égal à 1, selon l'allongement désiré de la cavité régénérative et l'encombrement des faisceaux au regard de la taille des miroirs. L'arrangement optique de la cavité régénérative de matrice unitaire peut être passif ou inclure le milieu amplificateur optique. Dans le cas où le milieu amplificateur optique est à l'intérieur de la cavité régénérative, le gain de la cavité régénérative est également amélioré comme la puissance de K.

Le système comporte également des moyens d'injection et d'extraction des impulsions laser dans la cavité régénérative. La cavité régénérative est configurée de telle sorte que sa longueur soit comprise entre N-1 et N fois la longueur de cavité de l'oscillateur, i.e. que la durée d'un aller-retour de chaque impulsion dans la cavité régénérative soit comprise entre N-1 et N fois la période τ1 du train de l'oscillateur, où N est un nombre entier supérieur ou égal à deux.

Le système fonctionne comme suit : les moyens d'injection font entrer des impulsions laser 10 dans la cavité régénérative. N impulsions circulent continuellement dans la cavité régénérative, lorsque la cellule de Pockels est inactive. Dès lors que la cellule de Pockels est activée, les N impulsions sont piégées dans la cavité régénérative, subissant une amplification à chaque aller-retour. L'amplificateur régénératif amplifie la salve de N impulsions, l'énergie d'amplification se répartissant entre les N impulsions. Puis, on déclenche l'extraction de la salve des N impulsions amplifiées hors de la cavité résonante en repassant la cellule de Pockels en mode inactif. On obtient ainsi une salve de N impulsions amplifiées, les impulsions de la salve étant toujours à la première fréquence de répétition f1. La fréquence de déclenchement des moyens d'extraction des impulsions détermine une deuxième fréquence entre deux salves d'impulsions laser amplifiées 20. La deuxième fréquence f2 est bien inférieure à la première fréquence de répétition f1.

Lorsque la période du train de l'oscillateur est inférieure au temps de montée et descente de la cellule de Pockels, on dispose d'un modulateur rapide afin d'injecter la salve de N impulsions requises.

Le nombre maximum d'impulsions de la salve d'impulsions piégée dans la cavité régénérative est déterminé par la longueur de la cavité régénérative et par la première fréquence f1.

Ainsi, pour une fréquence f1 de l'oscillateur, une cavité linéaire de longueur L permettra de produire des salves de N impulsions tel que : N=c/2/n/L/f1, avec c la vitesse de la lumière, n l'indice de réfraction du milieu de propagation des impulsions.

A titre d'exemple non limitatif, la longueur dans la cavité régénérative peut atteindre 150m linéaire, ce qui permet par exemple de produire une salve d'impulsions ayant une durée totale l'ordre de 1µs, la salve pouvant comprendre, selon les besoins, 1000 impulsions espacées de 1 ns (oscillateur ayant une première fréquence f1 égale à 1 GHZ) ou 50 impulsions espacées de 20ns (oscillateur ayant une première fréquence f1 égale à 50MHz).

De façon avantageuse, la longueur de la cavité amplificatrice peut être aisément modifiée, par exemple en modifiant l'alignement de la matrice unitaire. La modification de la longueur de la cavité permet ainsi de modifier le nombre d'impulsions de la salve d'impulsions. Par exemple, une même cavité régénératrice reconfigurable permet de couvrir une gamme allant de 1 pulse à 32 pulses, uniquement par l'alignement de deux miroirs, dans un même encombrement.

On note cependant que l'énergie du macropulse reste identique quel que soit le nombre d'impulsions dans le macropulse, pour un amplificateur donné, l'énergie du macropulse étant répartie entre les différentes impulsions constituant une salve d'impulsions.

Cette flexibilité en longueur de macropulse, peut être notamment très appréciée de la communauté des accélérateurs, qui utilise de plus en plus le régime par salves d'impulsions.

En outre, ce régime par salve possède de nombreux avantages en terme d'architecture, vis-à-vis de la gestion de l'extraction de l'énergie et de la gestion des nonlinéarités. En effet, l'énergie extraite est répartie sur N pulse, repoussant les limites en terme d'extraction de l'énergie du macropulse. Ceci permet en particulier d'exploiter plus efficacement des matériaux amplificateurs optiques à faible gain, i.e. ayant une fluence de saturation élevée, tels que l'Yb :CaF₂ ou l'Yb :verre et encore d'autres terres rares. En termes de gestion des nonlinéarités, N impulsions réduisent d'autant l'automodulation de phase, permettant de réduire significativement le taux d'étirement des impulsions nécessaire.

Ainsi, par exemple, un laser destiné à délivrer 100mJ en régime femtoseconde mono-impulsion nécessite un étirement temporel de 3ns pour limiter les effets de l'automodulation de phase. Un laser basé sur le même matériau amplificateur mais fonctionnant en régime de salve d'impulsions, ne requiert qu'un étirement temporel de 3ps pour une même énergie de 100mJ répartie sur 16 impulsions.

De façon particulièrement avantageuse, les moyens d'injection et les moyens de réjection comportent une cellule électro-optique de type cellule de Pockels commandée électriquement, la cellule de Pockels étant disposée à l'entrée-sortie de l'amplificateur régénératif.

Les systèmes et procédés antérieurs qui utilisent un amplificateur régénératif sont configurés pour ne piéger qu'une seule impulsion dans la cavité régénérative, et n'amplifier qu'une seule impulsion à la fois. Ainsi, le document WO2009/103313A1 décrit un système dans lequel une seule impulsion initiale est piégée puis une portion de l'impulsion initiale est extraite à chaque passage dans la cavité régénératrice pour former une salve de plusieurs impulsions à une fréquence supérieure à la fréquence initiale. Au contraire, le système de l'invention piège simultanément plusieurs impulsions initiales et forme une salve comportant autant d'impulsions en sortie que le nombre d'impulsions piégées dans la cavité régénératrice, les impulsions d'une salve étant à la même fréquence que la fréquence des impulsions piégées.

Dans le cas où la cadence de l'oscillateur 1 est inférieure à 100MHz, le temps de réponse de la cellule de Pockels utilisée dans l'amplificateur régénératif est suffisante pour sélectionner la salve d'impulsions laser 10 à injecter (cf. figure 1).

La figure 2 illustre une variante du système de génération d'impulsions laser amplifiées. Le dispositif comporte un oscillateur 1 qui génère des impulsions 110 à une fréquence f0 supérieure à 100MHz. Le système comporte des moyens de sélection 11 rapides de la salve d'impulsions laser à amplifier 10 en amont de l'injection dans l'amplificateur régénératif 2. Avantageusement, les moyens de sélection 11 de la salve d'impulsions 10 comportent un modulateur électro-optique ultrarapide, basé par exemple sur un interféromètre de Mach-Zender en guide d'onde, initialement développé dans le domaine des télécommunications.

Dans un mode de réalisation avantageux, non représenté, le dispositif de génération de salves d'impulsions laser comporte en outre un dispositif d'étirement temporel et un dispositif de compression temporelle. Préférentiellement, le dispositif d'étirement temporel est placé entre l'oscillateur 1 et l'amplificateur régénératif 2, et dispositif de compression temporelle est placé en sortie de l'amplificateur régénératif 2. Les dispositifs d'étirement temporel et de compression temporelle sont par exemple basés sur un ou plusieurs réseau(x) diffractif(s), prismes, réseau(x) de Bragg chirpé(s) en volume ou réseau(x) de Bragg chirpés inscrit(s) dans une fibre.

L'amplificateur régénératif comporte une cavité multipassage. Avantageusement, le nombre de passages du faisceau dans la cavité multipassage est ajustable de manière à optimiser la longueur totale de la cavité au nombre d'impulsions requises dans le macropulse (salve).

Selon un mode de réalisation préféré, le milieu amplificateur à gain est intégré dans la cavité multipassage de manière à assurer que le temps d'amplification dans la cavité régénérative reste largement inférieur au temps de fluorescence du matériau amplificateur.

Parmi les avantages du système de génération de salve d'impulsions, on notera d'une part que plus le nombre d'impulsions constituant le macropulse est élevé, moins il est nécessaire d'étirer les impulsions pour éviter les effets nonlinéaires et d'autre part moins la fluence par impulsion est critique vis-à-vis de la fluence de dommage des composants optiques formant la cavité régénératrice.

L'architecture du système d'amplification permet de simplifier grandement l'architecture du laser, tout en disposant d'impulsions toutes parfaitement synchrones avec une même référence électrique à la première fréquence de répétition f1.

Le système de l'invention peut aisément être adapté sur un laser à impulsion fonctionnant en régime mono-impulsion, pour le transformer en un laser fonctionnant en régime de salve d'impulsions laser.

Le générateur d'impulsions permet de répondre à de nouvelles applications, notamment dans les instruments scientifiques de type accélérateur de particules, pour lesquels les systèmes d'accélération d'électron sont limités en cadence par des modules de puissance RF, les klystrons, actuellement limités à 100Hz. Ainsi, un laser à salve d'impulsions permet de mieux exploiter certains matériaux laser optimisés pour le fonctionnement à une cadence relativement faible, de quelques dizaines à quelques centaines de Hertz. Le générateur de salve d'impulsions laser permet notamment une meilleure extraction d'énergie à cette cadence, tout en offrant une stabilité en énergie pulse à pulse optimale.

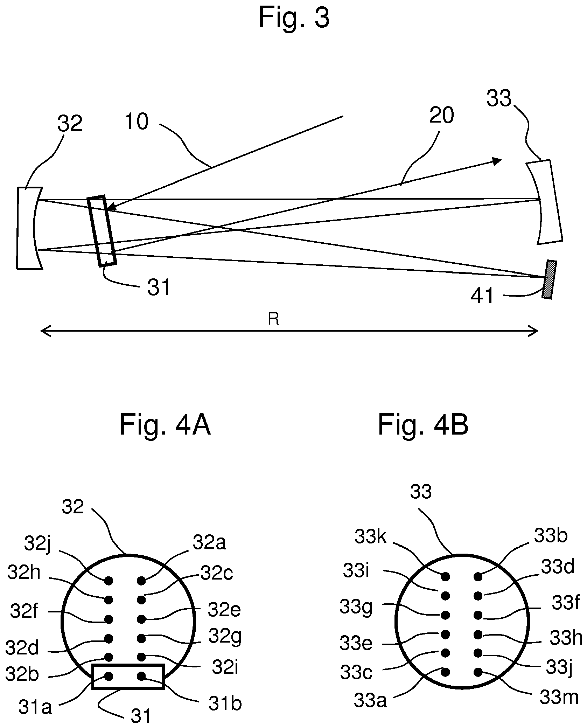

Les figures 3 à 6 illustrent des exemples d'amplificateurs multipassage et à faible pertes particulièrement bien adaptés pour la génération d'impulsions laser et notamment de salves d'impulsions laser telles que décrites dans la première partie de la présente description.

La figure 3 représente schématiquement un premier exemple de réalisation d'une cavité multi passage pour un amplificateur régénératif comprenant un milieu amplificateur optique 41 fonctionnant en réflexion. La cavité multi passage comporte un miroir d'injection et d'extraction 31, un premier miroir 32, un deuxième miroir 33 et un milieu amplificateur optique 41 fonctionnant en réflexion. Le milieu amplificateur optique 41 en réflexion comporte par exemple un cristal laser plan ou un milieu laser en forme de disque (slab laser). Le milieu amplificateur optique 41 est pompé optiquement par un faisceau de pompe non représenté. Avantageusement, le miroir d'injection et d'extraction 31 est un miroir plan, le premier miroir 32 et le deuxième miroir 33 sont des miroirs concaves. De façon préférée, le premier miroir 32 concave a un rayon de courbure égal à R, le deuxième miroir 33 concave a un rayon de courbure égal à R/2, la distance entre le premier miroir 32 concave et le deuxième miroir 33 concave est égale à R et la distance entre le premier miroir 32 concave et le milieu amplificateur optique 41 est aussi égale à R. Ainsi, le faisceau d'impulsions laser de forte puissance n'est jamais focalisé sur la surface d'un des miroirs 31, 32 ou 33.

Les angles d'orientation des miroirs 31, 32, 33 et du milieu amplificateur optique 41 sont déterminés de manière à ce qu'un faisceau optique entrant en un point sur le miroir d'injection et d'extraction 31 parcoure la cavité multi passage au moins deux fois, avant de ressortir de la cavité multi passage par le même miroir d'injection et d'extraction 31.

Par exemple sur la figure 3, on dirige un faisceau d'impulsions laser 10 vers le miroir d'injection et d'extraction 31, qui réfléchit le faisceau d'impulsions laser 10 vers le milieu amplificateur optique 41. Le milieu amplificateur optique 41 réfléchit ce faisceau d'impulsions laser amplifiées une première fois en direction du premier miroir 32. Le premier miroir 32 réfléchit ce faisceau d'impulsions laser amplifiées une première fois en direction du deuxième miroir 33. Le deuxième miroir 33 réfléchit ce faisceau d'impulsions laser amplifiées une première fois en direction du premier miroir 32. Le premier miroir 32 réfléchit à nouveau le faisceau d'impulsions laser amplifiées une première fois en direction du milieu amplificateur optique 41. Le milieu amplificateur optique 41 réfléchit ce faisceau d'impulsions laser amplifiées deux fois en direction du miroir d'injection et d'extraction 31. On extrait ainsi un faisceau d'impulsions laser 20 amplifiées deux fois.

La cavité multi passage de la figure 3 a l'avantage de permettre un recouvrement du faisceau amplifié une première fois et du faisceau amplifié une deuxième fois sur le milieu amplificateur optique 41. De façon particulièrement avantageuse, le milieu amplificateur optique 41 comporte un traitement réfléchissant de manière à réduire les pertes de la cavité multipassage.

Le nombre N de points de réflexion du faisceau laser sur les miroirs 32 et 33 dépend du réglage du miroir 31 et du cristal laser 41, et correspond alors à N/2 réflexions sur le cristal laser 41, donc N traversées dans le milieu amplificateur 41.

A titre d'exemple illustratif, les figures 4A et 4B représentent une vue de face du miroir d'injection et d'extraction 31 et du premier miroir 32, et respectivement deuxième miroir 33 d'une cavité multi passage telle que celle de la figure 3, ainsi que le décalage du point de réflexion d'un faisceau laser sur ces miroirs 31, 32, 33 à chaque passage dans la cavité multipassage.

Le faisceau d'impulsions laser 10 est injecté dans la cavité multipassage et est incident sur le miroir d'injection et d'extraction 31 en un point 31 a. Il est réfléchi dans la cavité multipassage sur le milieu amplificateur 41 puis est incident sur le premier miroir 32 au point 32a. Le faisceau laser est dirigé vers le deuxième miroir 33 et est incident sur ce deuxième miroir 33 en un premier point 33a. Le faisceau est ensuite réfléchi vers le premier miroir 32 en un point 32b et ainsi de suite par le deuxième miroir 33 au point 33b... jusqu'à être réfléchi vers le miroir d'injection et d'extraction 31. Lors du passage sur le premier miroir 32, le faisceau d'impulsions laser est incident sur le premier miroir 32 successivement au point 32a, 32b, 32c, ... jusqu'au point 32i. Les points 32a, 32b, ..., 32i sont décalés sur la surface du premier miroir 32. De même, lors du passage sur le deuxième miroir 33, le faisceau d'impulsions laser est incident sur le deuxième miroir 33 successivement au point 33a, 33b, 33c, ... jusqu'au point 33m. Les points 33a, 33b, ... 33m sont décalés sur la surface du deuxième miroir 33. Par contre, le faisceau laser est toujours collimaté lorsqu'il est incident sur la surface du milieu amplificateur 41.

Lorsque le faisceau laser comporte une salve d'impulsions, chaque miroir 31, 32, 33 est exposé à la fluence d'une impulsion à la fois. Or, la fréquence de répétition f1 des impulsions d'une salve est relativement faible, ce qui permet de réduire les risques d'endommagement des miroirs 31, 32, 33 exposés au faisceau laser.

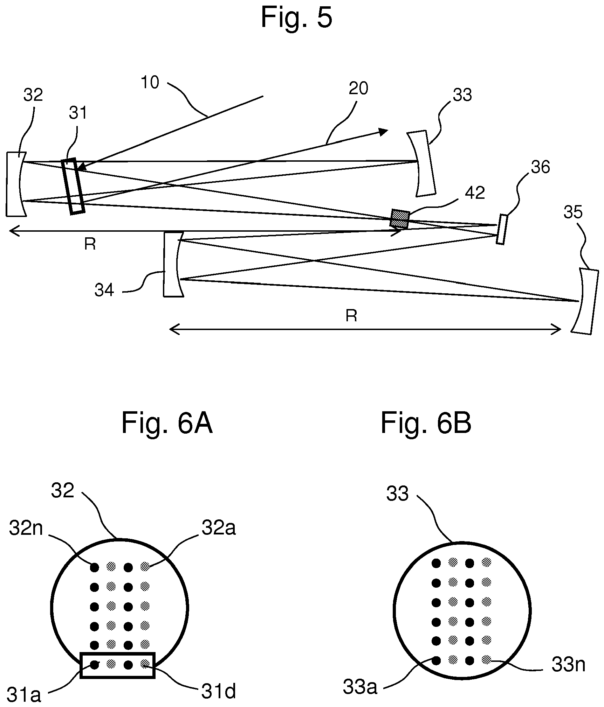

La figure 5 représente schématiquement un deuxième exemple de réalisation d'une cavité multi passage pour un amplificateur régénératif comprenant un milieu amplificateur optique 42 fonctionnant en transmission. Les mêmes composants portent les mêmes signes de référence que sur la figure 3. La cavité multi passage comporte un miroir d'injection et d'extraction 31, un premier miroir 32, un deuxième miroir 33 et un milieu amplificateur optique 42 fonctionnant en transmission. La cavité multi passage comporte en outre un troisième miroir 34 et un quatrième miroir 35. De façon avantageuse, la cavité multipassage comporte aussi un miroir 36 de repli. Le milieu amplificateur optique 42 en transmission comporte par exemple un cristal laser. Le milieu amplificateur optique 42 est pompé optiquement par un faisceau de pompe non représenté. Avantageusement, le miroir d'injection et d'extraction 31 et le miroir 34 de repli sont des miroirs plans ; le premier miroir 32, le deuxième miroir 33, le troisième miroir 34 et le quatrième miroir 35 sont des miroirs concaves. De façon préférée, le premier miroir 32 concave et le troisième miroir 34 concave ont un rayon de courbure égal à R, le deuxième miroir 33 concave et le quatrième miroir 35 ont un rayon de courbure égal à R/2. La distance entre le premier miroir 32 concave et le deuxième miroir 33 concave est égale à R et la distance entre le premier miroir 32 concave et le milieu amplificateur optique 42 est aussi égale à R. Symétriquement, la distance entre le troisième miroir 34 et le quatrième miroir 35 est égale à R et la distance entre le troisième miroir 34concave et le milieu amplificateur optique 42 est aussi égale à R.

Les angles d'orientation des miroirs 31, 32, 33 et du milieu amplificateur optique 41 sont déterminés de manière à ce qu'un faisceau optique 10 entrant en un point sur le miroir d'injection et d'extraction 31 parcoure la cavité multi passage au moins deux fois, avant de ressortir de la cavité multi passage par le même miroir d'injection et d'extraction 31 et forme un faisceau laser de sortie 20.

Par exemple sur la figure 5, on dirige un faisceau d'impulsions laser 10 vers le miroir d'injection et d'extraction 31, qui réfléchit le faisceau d'impulsions laser 10 vers le milieu amplificateur optique 42. Le milieu amplificateur optique 42 transmet ce faisceau d'impulsions laser amplifiées une première fois en direction du miroir de repli 36, puis du troisième miroir 34. Le troisième miroir 34 réfléchit ce faisceau d'impulsions laser amplifiées une première fois en direction du quatrième miroir 35. Le quatrième miroir 35 réfléchit ce faisceau d'impulsions laser amplifiées une première fois en direction du troisième miroir 34. Le troisième miroir 34 réfléchit à nouveau le faisceau d'impulsions laser amplifiées une première fois en direction du miroir de repli 36 puis du milieu amplificateur optique 42. Le milieu amplificateur optique 42 transmet ce faisceau d'impulsions laser amplifiées deux fois en direction du miroir d'injection et d'extraction 31. On extrait ainsi un faisceau d'impulsions laser 20 amplifiées deux fois.

La cavité multi passage de la figure 5 a l'avantage de permettre un recouvrement du faisceau amplifié une première fois et du faisceau amplifié au moins une deuxième fois à travers le milieu amplificateur optique 42. Le faisceau laser passe toujours au point dans le milieu amplificateur optique 42.

Le nombre N de points de réflexion du faisceau laser sur les miroirs 32, 33, 34 et 35 dépend du réglage des miroirs de la cavité multipassage et correspond alors à N traversées dans le milieu amplificateur 42.

Les points sur les miroirs 32 et 33 (symétriquement sur les miroirs 34 et 35) peuvent suivre le schéma illustré sur les figures 4A et 4B.

La cavité multipassage de la figure 3 ou de la figure 5 présente l'avantage d'être modifiable simplement, pour passer d'un nombre pair N à un nombre pair N' de traversées dans le milieu amplificateur, sous réserve que les dimensions des miroirs vis-à-vis des tailles de faisceau le permettent.

Par ailleurs, le système permet de garantir une taille de faisceau identique dans le cristal, avec un point de recouvrement des faisceaux au centre du cristal.

Comme illustré sur les figures 6A et 6B, il est possible d'augmenter le nombre de spots sur les miroirs 32, 33 au moyen d'un système secondaire d'imagerie selon un autre axe (horizontal sur les figures 6A et 6B) pour produire un décalage latéral spots représentés en grisé.

Les figures 6A et 6B représentent une vue de face du miroir d'injection et d'extraction 31 et du premier miroir 32, et respectivement deuxième miroir 33 d'une cavité multi passage telle que celle de la figure 3 ou de la figure 5, ainsi que le décalage du point de réflexion d'un faisceau laser sur ces miroirs 31, 32, 33 (par symétrie sur les miroirs 34 et 35 dans le cas de la cavité de la figure 5) à chaque passage dans la cavité multipassage.

Le faisceau d'impulsions laser 10 est injecté dans la cavité multipassage et est incident sur le miroir d'injection et d'extraction 31 en un point 31 a. Il est réfléchi dans la cavité multipassage sur le milieu amplificateur 41 puis est incident sur le premier miroir 32 au point 32a. Le faisceau laser est dirigé vers le deuxième miroir 33 et est incident sur ce deuxième miroir 33 en un premier point 33a. Le faisceau est ensuite réfléchi vers le premier miroir 32 en un point 32b et ainsi de suite par le deuxième miroir 33 au point 33b...33n jusqu'à être réfléchi vers le miroir d'injection et d'extraction 31, au point 31d. Lors du passage sur le premier miroir 32 le faisceau d'impulsions laser est incident sur le premier miroir 32 successivement au point 32a, 32b, 32c, ... jusqu'au point 32n. Les points 32a, 32b, ..., 32n sont décalés sur la surface du premier miroir 32. De même, lors du passage sur le deuxième miroir 33 le faisceau d'impulsions laser est incident sur le deuxième miroir 33 successivement au point 33a, 33b, 33c, ... jusqu'au point 33n. Les points 33a, 33b, ... 33n sont décalés sur la surface du deuxième miroir 33. Par contre, le faisceau laser est toujours collimaté lorsqu'il est incident sur la surface du milieu amplificateur 42.

Lorsque le faisceau laser comporte une salve d'impulsions, chaque miroir 31, 32, 33, 34, 35, 36 est exposé à la fluence d'une impulsion à la fois, ce qui permet de réduire les risques d'endommagement de ces miroirs lorsqu'ils sont exposés au faisceau laser.

Les cavités multipassage, illustrées sur les figures 3 et 5, permettent de disposer d'une cavité régénératrice de grande longueur tout en présentant un encombrement réduit. Avantageusement, le système optique à miroirs permet de replier le chemin optique des impulsions dans la cavité, sans introduire de pertes. Une telle cavité permet de piéger une salve d'impulsions laser pour les amplifier dans un même milieu amplificateur 41 ou 42. Ces cavités permettent ainsi de générer une salve d'impulsions amplifiées dès leur génération. L'énergie stockée dans le milieu amplificateur est répartie entre les impulsions d'une salve d'impulsions. La fréquence des impulsions laser d'une salve est ainsi égale à leur fréquence initiale à l'entrée de la cavité multipassage. Les impulsions d'une même salve sont synchronisées avec une horloge, par exemple l'horloge de référence de l'oscillateur. De plus, les impulsions de salves successives restent aussi synchronisées à cette horloge de référence.

Un ou plusieurs étages supplémentaires d'amplification peuvent être disposés en sortie de la cavité régénératrice.

## Revendications

1. Système de génération d'une salve d'impulsions laser ultracourtes et de forte puissance (20) comprenant :
- des moyens de génération (1, 11) d'impulsions laser (10) à une première fréquence de répétition f₁ et une période de répétition τ1 égale à l'inverse de la première fréquence de répétition f₁ ;
- des moyens d'amplification (2) comprenant un milieu amplificateur optique (41, 42), une cavité optique régénérative multipassage, des moyens d'injection desdites impulsions laser (10) dans ladite cavité optique régénérative, et des moyens d'extraction desdites impulsions laser de ladite cavité optique régénérative,
**caractérisé en ce que** :
- la cavité optique régénérative présente une longueur totale telle que la durée d'un aller-retour de chaque impulsion dans ladite cavité optique régénérative est comprise entre N-1 et N fois la période de répétition τ1 des moyens de génération (1, 11) desdites impulsions laser (10), où N est un nombre entier supérieur ou égal à deux,
- lesdits moyens d'injection sont adaptés pour piéger une salve de N impulsions laser (10) dans ladite cavité optique régénérative,
- lesdits moyens d'extraction sont adaptés pour extraire ladite salve de N impulsions laser de ladite cavité optique régénérative, et **en ce que**
- le milieu amplificateur est disposé à l'intérieur de ladite cavité optique régénérative, ledit milieu amplificateur optique (41, 42) est adapté pour amplifier ladite salve de N impulsions laser et former une salve d'impulsions laser amplifiées (20).

2. Système de génération d'une salve d'impulsions laser selon la revendication 1 dans lequel ladite cavité optique régénérative comporte un système optique de matrice unitaire.

3. Système de génération d'une salve d'impulsions laser selon la revendication 1 ou 2 dans lequel lesdits moyens d'injection et les moyens d'extraction comportent une cellule de Pockels configurée de manière à être entièrement bloquante entre l'injection de la salve d'impulsions et l'extraction de ladite salve d'impulsions

4. Système de génération d'une salve d'impulsions laser selon l'une des revendications 1 à 3 dans lequel la cavité optique régénérative est une cavité multipassage et dans lequel le milieu amplificateur est disposé à l'intérieur de ladite cavité optique régénérative multipassage de manière à ce qu'une impulsion de la salve d'impulsions effectue une pluralité de passages par le milieu amplificateur.

5. Système de génération d'une salve d'impulsions laser selon la revendication 4 dans lequel ladite cavité optique régénérative comprenant un premier miroir concave (32) de rayon de courbure R, et un deuxième miroir concave (33) de rayon de courbure R/2, la distance entre le premier miroir (32) et le deuxième miroir (33) étant égale à R et la distance entre le premier miroir (32) et le milieu amplificateur optique (41, 42) étant égale à R.

6. Système de génération d'une salve d'impulsions laser selon la revendication 4 dans lequel ledit milieu amplificateur optique (41) fonctionne en réflexion,

7. Système de génération d'une salve d'impulsions laser selon la revendication 4 dans lequel ledit milieu amplificateur optique (42) fonctionne en transmission, ladite cavité optique régénérative comprenant en outre un troisième miroir (34) concave de rayon de courbure R, un quatrième miroir (35) concave de rayon de courbure R/2, la distance entre le troisième miroir (34) et le quatrième miroir (35) étant égale à R et la distance entre le troisième miroir (34) et le milieu amplificateur optique (42) étant égale à R.

8. Système de génération d'une salve d'impulsions laser selon l'une des revendications 4 à 7 dans lequel la cavité optique régénérative est une cavité multipassage comportant un système optique à miroirs (31, 32, 33, 34, 35, 36) disposés de manière à ce que le faisceau incident sur chacun desdits miroirs (31, 32, 33, 34, 35, 36) soit décalé spatialement à chaque passage dans ladite cavité multipassage.

9. Procédé de génération d'une salve d'impulsions laser ultracourtes et de forte puissance (20) comprenant les étapes suivantes :
- génération d'impulsions laser (10) à une première fréquence de répétition f₁ et une période de répétition τ1 égale à l'inverse de la première fréquence de répétition f₁ ;
- injection desdites impulsions laser (10) dans une cavité optique régénérative d'un amplificateur régénératif, la cavité optique régénérative présente une longueur totale telle que la durée d'un aller-retour de chaque impulsion dans ladite cavité optique régénérative est comprise entre N-1 et N fois la période τ1 des moyens de génération (1, 11) desdites impulsions laser (10), où N est un nombre entier supérieur ou égal à deux,
- piégeage d'une salve de N impulsions laser (10) dans ladite cavité optique régénérative,
- extraction de ladite salve de N impulsions laser de ladite cavité optique régénérative, et
- amplification optique de ladite salve de N impulsions laser pour former une salve d'impulsions laser amplifiées (20).

## Patentansprüche

1. System zur Erzeugung einer Folge von ultrakurzen Hochleistungslaserimpulsen(20) mit
- Mitteln (1, 11) zum Erzeugen von Laserimpulsen (10) mit einer ersten Wiederholungsfrequenz f₁ und einer Wiederholungsperiode τ1, die gleich dem Kehrwert der ersten Wiederholungsfrequenz f₁ ist,
- Verstärkermitteln (2), die ein optisches Verstärkungsmedium (41, 42), eine regenerative optische Kammer mit Mehrfachdurchlauf, Mittel zum Eingeben der besagten Laserimpulse (10) in die regenerative optische Kammer und Mittel zum Herausführen der Laserimpulse aus der regenerativen optischen Kammer aufweisen
**dadurch gekennzeichnet, daß**
- die regenerative optische Kammer eine Gesamtlänge derart aufweist, daß die Dauer eines Hin- und Rückweges jedes Impulses in der regenerativen optischen Kammer zwischen dem N-1- und dem N-fachen der Wiederholungsperiode τ₁ der Mittel (1, 11) zum Erzeugen von Laserimpulsen (10) beträgt, wobei N eine ganze Zahl größer als oder gleich zwei ist,
- die Eingabemittel dazu ausgelegt sind, eine Folge von N Laserimpulsen (10) in der regenerativen optischen Kammer einzufangen,
- die Mittel zum Herausführen dazu ausgelegt sind, die Folge von N Laserimpulsen aus der regenerativen optischen Kammer herauszuführen, und daß
- das Verstärkerumfeld im Inneren der regenerativen optischen Kammer angeordnet ist, wobei das optische Verstärkungsmedium (41, 42) dazu ausgelegt ist, die Folge von N Laserimpulsen zu verstärken und eine Folge von verstärkten Laserimpulsen (20) zu bilden.

2. System zur Erzeugung einer Folge von Laserimpulsen gemäß Anspruch 1, bei dem die regenerative optische Kammer ein optisches System mit Einheitsmatrix aufweist.

3. System zur Erzeugung einer Folge von Laserimpulsen gemäß Anspruch 1 oder 2, bei dem die Mittel zum Eingeben und die Mittel zum Herausführen eine Pockelszelle aufweisen, die so ausgelegt ist, daß sie zwischen dem Eingeben der Folge von Impulsen und dem Herausführen der Folge von Impulsen vollständig sperrt.

4. System zur Erzeugung einer Folge von Laserimpulsen gemäß einem der Ansprüche 1 bis 3, bei dem die regenerative optische Kammer eine Kammer mit Mehrfachdurchlauf ist und bei dem das Verstärkungsmedium im Inneren der regenerativen optischen Kammer mit Mehrfachdurchlauf angeordnet ist, so daß eine Folge von Impulsen eine Anzahl von Durchläufen durch das Verstärkermedium ausführt.

5. System zur Erzeugung einer Folge von Laserimpulsen gemäß Anspruch 4, bei dem die regenerative optische Kammer einen ersten konkaven Spiegel (32) mit einem Krümmungsradius R und einen zweiten konkaven Spiegel (33) mit einem Krümmungsradius R/2 aufweist, wobei der Abstand zwischen dem ersten Spiegel (32) und dem zweiten Spiegel (33) gleich R und der Abstand zwischen dem ersten Spiegel (32) und dem optischen Verstärkungsmedium (41, 42) gleich R sind.

6. System zur Erzeugung einer Folge von Laserimpulsen gemäß Anspruch 4, bei dem das optische Verstärkungsmedium (41) reflektierend funktioniert.

7. System zur Erzeugung einer Folge von Laserimpulsen gemäß Anspruch 4, bei dem das optische Verstärkungsmedium (42) durchleitend funktioniert, wobei die regenerative optische Kammer außerdem einen dritten konkaven Spiegel (34) mit Krümmungsradius R und einen vierten konkaven Spiegel (35) mit Krümmungsradius R/2 aufweist, wobei der Abstand zwischen dem dritten Spiegel (34) und dem fünften Spiegel (35) gleich R und der Abstand zwischen dem dritten Spiegel (34) und dem optischen Verstärkungsmedium (42) gleich R sind.

8. System zur Erzeugung einer Folge von Laserimpulsen gemäß einem der Ansprüche 4 bis 7, bei dem die regenerative optische Kammer eine Kammer mit Mehrfachdurchlauf ist, die ein optisches System aus Spiegeln (31, 32, 33, 34, 35, 36) aufweist, die so angeordnet sind, daß der auf jeden der Spiegel (31, 32, 33, 34, 35, 36) einfallende Strahl bei jedem Durchlauf durch die Kammer mit Mehrfachdurchlauf räumlich versetzt wird.

9. Verfahren zur Erzeugung einer Folge von ultrakurzen Hochleistungslaserimpulsen (20) mit folgenden Schritten :
- Erzeugen von Laserimpulsen (10) mit einer ersten Wiederholungsfrequenz f₁ und einer Wiederholungsperiode τ₁, die gleich dem Kehrwert der ersten Wiederholungsfrequenz f₁ ist,
- Eingeben der besagten Laserimpulse (10) in eine regenerative optische Kammer eines regenerativen Verstärkers, wobei die regenerative optische Kammer eine Gesamtlänge derart aufweist, daß die Dauer eines Hin- und Rückweges jedes Impulses in der regenerativen optischen Kammer zwischen dem N-1- und dem N-fachen der Wiederholungsperiode τ₁ der Mittel (1, 11) zum Erzeugen von Laserimpulsen (10) beträgt, wobei N eine ganze Zahl größer als oder gleich zwei ist,
- Einfangen einer Folge von N Laserimpulsen (10) in der regenerativen optischen Kammer,
- Herausführen einer Folge von N Laserimpulsen aus der regenerativen optischen Kammer und
- optisches Verstärken der Folge von N Laserimpulsen, um eine Folge von verstärkten Laserimpulsen (20) zu bilden.

## Claims

1. A system for generating a burst of ultra-short, high-power laser pulses (20), comprising:
- means (1, 11) for generating laser pulses (10) at a first repetition frequency f1 and a repetition period τ1 equal to the inverse of the first repetition frequency f1;
- amplification means (2) comprising an optical amplifying medium (41, 42), a multi-passage regenerative optical cavity, means for injecting said laser pulses (10) into said regenerative optical cavity, and means for extracting said laser pulses from said regenerative optical cavity,
**characterized in that**:
- the regenerative optical cavity has such a total length that the duration of a round trip of each pulse in said regenerative optical cavity is comprised between N-1 and N times the repetition period τ1 of the generation means (1, 11) of said laser pulses (10), where N is an integer higher than or equal to two,
- said injection means are adapted to trap a burst of N laser pulses (10) in said regenerative optical cavity,
- said extraction means are adapted to extract said burst of N laser pulses from said regenerative optical cavity, and **in that**
- the amplifying medium is arranged inside said regenerative optical cavity, said optical amplifying medium (41, 42) is adapted to amplify said burst of N laser pulses and to form a burst of amplified laser pulses (20).

2. The system for generating a burst of laser pulses according to claim 1, wherein said regenerative optical cavity includes an optical system with a unitary matrix.

3. The system for generating a burst of laser pulses according to claim 1 or 2, wherein said injection means and said extraction means include a Pockels cell configured so as to be fully blocking between the injection of the pulse burst and the extraction of said pulse burst.

4. The system for generating a burst of laser pulses according to one of claims 1 to 3, wherein the regenerative optical cavity is a multi-passage cavity and wherein the amplifying medium is arranged in said multi-passage regenerative optical cavity so that one pulse of the pulse burst performs a plurality of passages through the amplifying medium.

5. The system for generating a burst of laser pulses according to claim 4, wherein said regenerative optical cavity comprises a first concave mirror (32) of radius of curvature R, and a second concave mirror (33) of radius of curvature R/2, the distance between the first mirror (32) and the second mirror (33) being equal to R and the distance between the first mirror (32) and the optical amplifying medium (41, 42) being equal to R.

6. The system for generating a burst of laser pulses according to claim 4, wherein said optical amplifying medium (41) operates in reflection.

7. The system for generating a burst of laser pulses according to claim 4, wherein said optical amplifying medium (42) operates in transmission, said regenerative optical cavity further comprising a third concave mirror (34) of radius of curvature R, a fourth concave mirror (35) of radius of curvature R/2, the distance between the third mirror (34) and the fourth mirror (35) being equal to R and the distance between the third mirror (34) and the optical amplifying medium (42) being equal to R.

8. The system for generating a burst of laser pulses according to one of claims 4 to 7, wherein the regenerative optical cavity is a multi-passage cavity including an optical system with mirrors (31, 32, 33, 34, 35, 36) arranged in such a manner that the beam incident on each of said mirrors (31, 32, 33, 34, 35, 36) is spatially offset at each passage in said multi-passage cavity.

9. A method for generating a burst of ultra-short, high-power laser pulses (20) comprising the following steps:
- generating laser pulses (10) at a first repetition frequency f1 and a repetition period τ1 equal to the inverse of the first repetition frequency f1;
- injecting said laser pulses (10) into a regenerative optical cavity of a regenerative amplifier, the regenerative optical cavity has such a total length that the duration of a round trip of each pulse in said regenerative optical cavity is comprised between N-1 and N times the period τ1 of the means (1, 11) for generating said laser pulses (10), where N is an integer higher than or equal to two;
- trapping a burst of N laser pulses (10) in said regenerative optical cavity;
- extracting said burst of N laser pulses of said regenerative optical cavity; and
- optically amplifying said burst of N laser pulses to form a burst of amplified laser pulses (20).
